# FASCICULE DE BREVET EUROPEEN

(11) **EP 2 681 611 B1**
(45) Date de publication et mention de la délivrance du brevet: **20.01.2016**
(21) Numéro de dépôt: 12705355.1
(22) Date de dépôt: 23.01.2012
(51) Int. Cl.: G02C 5/14, G02C 5/00, G02C 5/22

(54) **DISPOSITIF D'ARTICULATION D'UNE BRANCHE DE LUNETTE**
VORRICHTUNG ZUM AUSKLAPPEN EINES BRILLENBÜGELS
DEVICE FOR HINGING A SPECTACLE TEMPLE

(30) Priorité: 01.03.2011 FR 1151642
(43) Date de publication de la demande: 08.01.2014
(73) Titulaire: Magic Design Project, 13011 Marseille (FR)
(72) Inventeur: BELLONE, Denis, 13006 Marseille (FR)
(74) Mandataire: Domange, Maxime
(86) Numéro de dépôt international: PCT/FR2012/050138
(87) Numéro de publication internationale: WO 2012/117174

(56) Documents cités:
- WO-A1-2006/136932
- WO-A1-2010/006510
- DE-U1-202005 001 204
- FR-A- 954 467
- US-A- 5 844 655
- US-A1- 2005 259 218

## Description

### Arrière-plan de l'invention

La présente invention se rapporte au domaine général des dispositifs d'articulation de branches d'une paire de lunettes sur une monture de lunettes autour d'un axe d'articulation.

De multiples sortes de dispositifs permettant une telle articulation sont connues. Bien souvent, des vis sont utilisées pour solidariser la branche avec la monture et réaliser l'articulation. Ce type de dispositif d'articulation subit des problèmes de rupture ou de dévissage. Cela est reconnu comme problème récurrent par les porteurs de lunettes.

Ces inconvénients sont particulièrement gênants dans la mesure où les utilisateurs ne peuvent généralement pas réparer eux-mêmes le dispositif d'articulation de la branche car des outils particuliers sont généralement nécessaires.

Par ailleurs, il existe des dispositifs variés permettant également d'obtenir une butée de charnière permettant que les branches restent fermées lorsqu'elles sont rabattues sur la monture.

Il existe aussi des dispositifs présentant un comportement particulier à l'extension latérale évitant la rupture des branches ou de la monture lorsque les branches sont tirées ou poussées vers l'extérieur de la monture.

Ces dispositifs sont généralement complexes et font appel à des systèmes de ressorts. Ces ressorts subissent une détérioration avec le temps ou les sollicitations multiples de la paire de lunettes. En outre, ces dispositifs connus introduisent une masse conséquente au sein de la monture. Le poids étant un des critères de confort majeur dans le domaine des montures de lunettes, cela est préjudiciable.

### Objet et résumé de l'invention

La présente invention a donc pour but principal de palier les inconvénients des dispositifs d'articulation connus de l'art antérieur en proposant un dispositif selon la revendication 1.

Une telle constitution du dispositif d'articulation est particulièrement simple et aisée à mettre en oeuvre. Elle est basée sur la réalisation d'une charnière très simple, formée d'ergots de pivotement qui sont introduits dans de simples enroulements de lamelles qui créent, en leur sein, un espace apte à recevoir les ergots de pivotement. La mise sous contrainte des sous-branches équivaut à un effet de pince en ouverture ou en fermeture des sous-branches dès lors que les ergots sont introduits dans les enroulements prévus à cet effet. Cet effet de pince prévu selon l'invention permet le maintien et la mise en oeuvre de diverses caractéristiques décrites dans la suite.

Selon une caractéristique de l'invention, le premier élément fonctionnel est porté par la branche et le second élément fonctionnel est porté par la monture.

Cette caractéristique est particulièrement intéressante pour des raisons esthétiques. En effet, la monture est classiquement plus volumineuse que la branche et la branche est par définition longiligne. En implémentant l'enroulement sur la monture, on fait porter l'élément le plus volumineux en trois dimensions par la monture et l'élément le plus longiligne comprenant les deux sous-branches semi rigides par la branche. Cela est plus avantageux que le contraire, même s'il reste possible de faire porter l'enroulement par la branche et les sous-branches semi-rigides par la monture.

Dans un mode de réalisation particulier, les lamelles du second élément fonctionnel porté par la monture sont formées de manière composite avec des sous-lamelles appartenant à des sous-montures gigognes et formant des enroulements adjacents le long de l'axe d'articulation de la branche.

Ce mode de réalisation est particulièrement esthétique. En effet, la monture est formée de plusieurs sous-montures successives typiquement réalisées par découpage à partir de plaques de métal. Cela permet de mettre deux ou trois sous-montures en parallèle, ce qui produit un effet tridimensionnel particulièrement esthétique.

Le fait que chacune des sous-montures gigognes porte un enroulement permet de former un axe d'articulation complet en positionnant de manière adjacente ces enroulements le long de l'axe d'articulation de la branche.

Avantageusement, les enroulements des montures gigognes sont emboités les uns dans les autres.

Cela permet de former facilement l'axe d'articulation en positionnant les sous-montures en fonction de l'emboitement de leurs enroulements.

Selon une caractéristique avantageuse de l'invention, au moins une lamelle présente un profil fonctionnel sur le pourtour de l'enroulement ayant pour fonction d'appliquer une contrainte variable sur les deux sous-branches semi-rigides lorsque les ergots pivotent dans les enroulements lors du mouvement d'articulation de la branche.

Cette caractéristique, du type de celle utilisée pour les pinces à classeurs double clics, permet d'assurer une dynamique au mouvement en rotation de la branche. Dans le cas où des montures gigognes sont utilisés, cette caractéristique consiste à munir au moins une sous-lamelle d'une des sous-montures gigognes, et de préférence deux sous-lamelles, d'un profil fonctionnel tel que défini par cette caractéristique.

Selon une caractéristique avantageuse, le profil fonctionnel présente un creux tel qu'il réalise une butée de charnière lorsque la branche est repliée vers la monture, la contrainte appliquée sur les sous-branches augmentant lors du pivotement d'ouverture de la branche quand elle quitte le creux.

Un tel profil fonctionnel permet d'assurer le maintien en position des branches lorsqu'elles sont rabattues vers la monture.

Typiquement, le profil fonctionnel peut être constitué par une dent ou une simple pente assurant la mise sous contrainte des sous-branches semi-rigides, dès lors que la branche est éloignée de la monture. Cela est détaillé dans la description.

Avantageusement, le profil fonctionnel présente une dent telle qu'il applique une opposition transitoire à la mobilisation en rotation selon un principe de double clic, l'ensemble lamelles enroulées/sous-branches semi-rigides formant alors un ressort solide lors de la mobilisation de la branche sur la dent.

Un tel profil fonctionnel, comprenant typiquement une dent sur le pourtour de l'enroulement, assure une dynamique agréable de la mobilisation en rotation de la branche. La dynamique de la branche est alors proche de celle des pinces double clic entre les deux positions principales des branches : ouvertes et fermées.

Selon une caractéristique avantageuse de l'invention, le profil fonctionnel présente une pente telle qu'il réalise un rappel en extension latérale de la branche, la contrainte appliquée sur les sous-branches se déplaçant sur la pente augmentant lors du pivotement d'extension latérale de la branche préalablement ouverte.

Cette caractéristique, réalisée typiquement par une pente particulière du profil fonctionnel de la ou des lamelle(s), permet de freiner le mouvement en extension latérale des branches tout en permettant une extension latérale limitée des branches et en assurant un positionnement angulaire préférentiel et optimal de la branche en position ouverte, soit à 90° environ de la monture.

Selon une caractéristique particulière, les deux lamelles présentent un profil fonctionnel, ces deux profils fonctionnels étant symétriques par rapport à un plan médian situé entre les lamelles enroulées.

Cette caractéristique préférentielle permet que les deux sous-branches semi-rigides conservent un mouvement régulier le long de la mobilisation en rotation. En effet, le fait que les deux lamelles présentent deux profils fonctionnels symétriques, permet que les deux sous-branches aient des mouvements identiques en parallèle. Cela assure une mobilisation régulière et homogène de la branche de lunette.

Selon un mode de réalisation particulier, les sous-branches sont deux pièces indépendantes fixées ensemble au sein de la branche après que les ergots aient été introduits dans les enroulements.

Avec une telle réalisation, on permet qu'un matériau relativement rigide soit utilisé sans que la limite d'élasticité du matériau ne soit atteinte lors de sa déformation à l'installation. En effet, le principe de l'invention implique que les ergots soient introduits dans les enroulements. Cela implique des déformations assez importantes des deux sous-branches semi-rigides lorsqu'elles sont réalisées de manière monobloc dans un même matériau, typiquement une plaque métallique. La flexibilité nécessaire pour l'introduction des ergots devient rapidement un handicap du point de vue du comportement ultérieur des sous-branches.

En effet, les sous-branches doivent conserver une élasticité suffisante pour leur coopération avec les enroulements voire, plus précisément, avec le profil fonctionnel des lamelles. Dans le cas où les sous-branches semi-rigides sont réalisées à partir d'une seule et même pièce, il est possible que le matériau atteigne sa limite d'élasticité et cela est préjudiciable ensuite au comportement de la branche en pivotement dans l'enroulement. Ainsi, l'utilisation de deux pièces indépendantes pouvant être introduites chacune de leur côté dans les enroulements puis être assemblées dans leur montage au sein de la branche est particulièrement avantageux.

Selon une caractéristique particulière, les deux sous-branches sont aptes à être coulissées dans un fourreau présent à cet effet dans la branche ou dans la monture pour y être fixées.

Avec cette caractéristique, on obtient une solidarisation des deux sous-branches semi-rigides et une immobilisation de celles-ci relativement à la branche de manière particulièrement simple.

On note néanmoins que l'introduction dans une branche de lunette fourreau n'est pas nécessaire dans la mesure où les deux sous-branches peuvent constituer directement la branche elle-même sans être revêtue d'un quelconque élément additionnel.

### Brève description des dessins

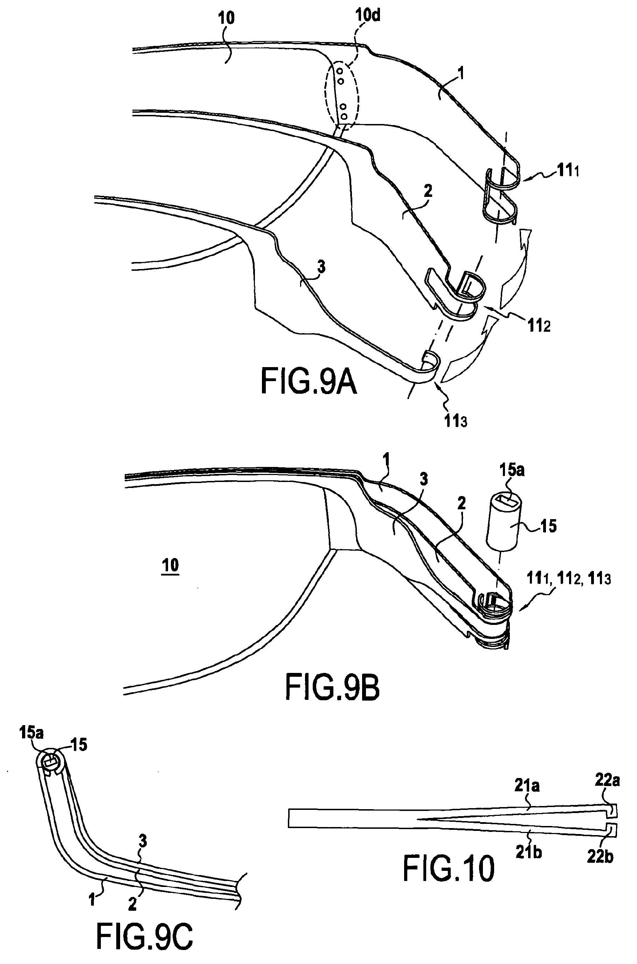

D'autres caractéristiques et avantages de la présente invention ressortiront de la description faite ci-dessous, en référence aux dessins annexés qui en illustrent dans les figures 9 et 10 un exemple de réalisation dépourvu de tout caractère limitatif. Sur les figures :
- la figure 1 montre une monture de lunette vue de face ;
- les figures 2A et 2B montrent un premier élément fonctionnel, ici porté par une branche de lunette ;
- les figures 3A et 3B montrent un second élément fonctionnel ici porté par la monture vu, respectivement, de dessus après enroulement des lamelles et de face avant enroulement des lamelles ;
- la figure 4 montre un détail de la fenêtre spécifique telle qu'utilisée dans l'exemple de la figure 3 ;
- la figure 5 montre un autre second élément fonctionnel;
- les figures 6A et 6B montrent une variante de monture supportant un second élément fonctionnel vu, respectivement, de dessus après enroulement des lamelles et de face avant enroulement des lamelles ;
- la figure 7 montre une autre variante de monture supportant un second élément fonctionnel;
- les figures 8A et 8B montrent des sous-branches semi-rigides du premier élément fonctionnel, ici destiné à être porté par la branche ;
- les figures 9A, 9B et 9C montrent une réalisation particulière d'un second élément fonctionnel selon l'invention ;
- la figure 10 montre une réalisation particulière d'un premier élément fonctionnel selon l'invention apte à coopérer avec le second élément fonctionnel représenté sur la figure 9.

### Description détaillée d'un mode de réalisation

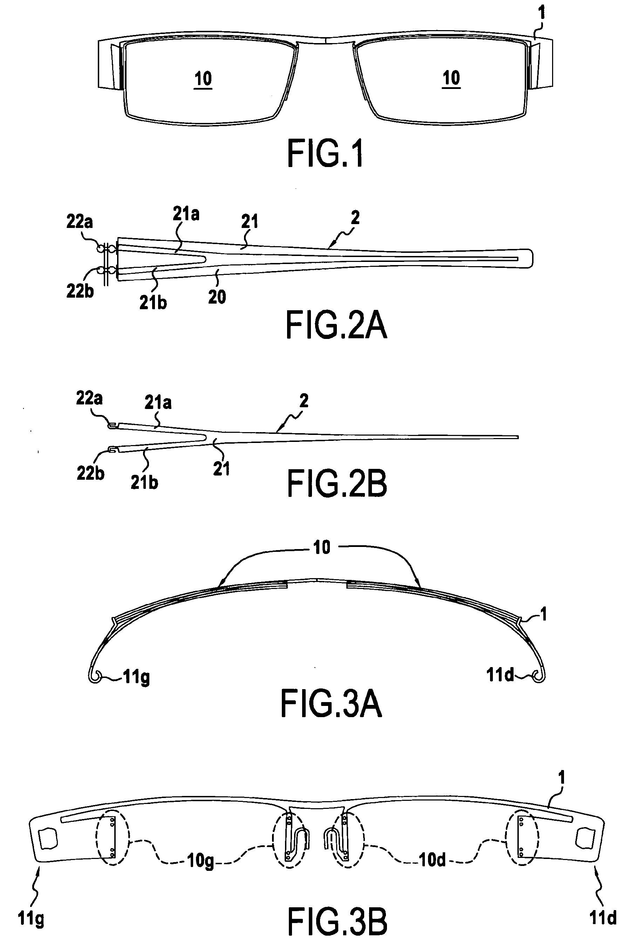

La figure 1 montre une vue de face d'une monture de lunette 1 supportant des verres 10 et dans laquelle l'invention peut être implémentée.

La figure 2A montre une branche de lunette 2 constituée d'un fourreau 20 en plastique, nylon, bois ou autre matériau, dans lequel vient coulisser une armature métallique 21 supportant deux sous-branches semi-rigides 21a et 21b.

A l'extrémité des sous-branches 21a et 21b, se trouvent deux ergots 22a et 22b découpés dans le plan des deux sous-branches et destinés à être conformés ultérieurement.

La figure 2B montre les ergots 22a et 22b après conformation. En effet, ainsi que visible sur la figure 2A, les ergots 22a et 22b sont d'abord découpés dans la plaque métallique de l'armature métallique 21 puis, pivotés à 90° et repliés de manière à former un ergot 22a et 22b apte à pivoter dans un enroulement.

Il existe d'autres réalisations d'un ergot qui seront explicitées dans la suite. De manière générale, toute autre manière de former un ergot à l'extrémité de deux sous-branches semi-rigides peut être utilisée selon l'invention, dès lors que leur introduction dans un enroulement tel que décrit dans la suite est possible et fonctionnel.

La figure 3A montre une monture 1 selon l'invention en vue de dessus. Elle montre la présence de deux enroulements 11g et 11d aux extrémités latérales de la monture 1.

La figure 3B montre la même monture mise à plat, c'est-à-dire avant la formation des enroulements 11d et 11g et avant la fixation d'un verre 10. La fixation des verres est réalisée grâce à la présence d'éléments de fixation schématiquement représentés par les références 10g et 10d, la lettre d correspondant à « droite » et la lettre g à « gauche ». Une telle fixation de verre avec des éléments de fixation tels que montrés sur la figure 3B est tout à fait connue de l'homme du métier.

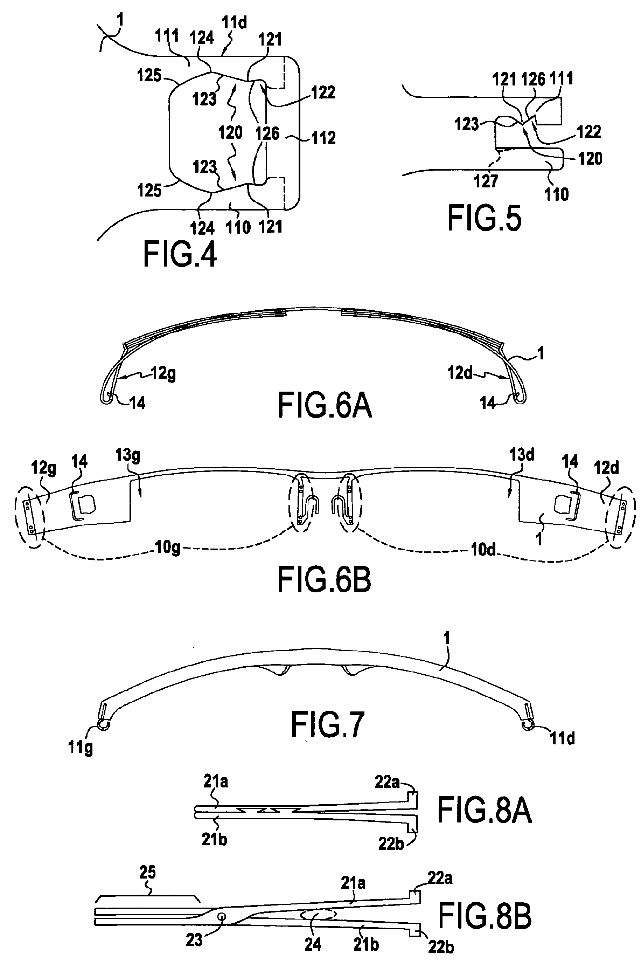

Un détail de l'extrémité latérale droite de la monture 1 est montré en détail sur la figure 4. Dans la suite, pour simplifier les notations, l'enroulement est toujours noté 11d mais les lamelles seront notées 110 et 111, au lieu de, en toute rigueur, 110d et 111d. L'enroulement 11d, ici déroulé, comprend donc deux lamelles 110 et 111 reliées, dans la réalisation particulière des figures 3 et 4, par une structure faisant pont 112 formant ainsi une fenêtre dite fenêtre spécifique dans la plaque de métal constituant la monture 1. Les deux lamelles 110 et 111 présentent chacune un profil fonctionnel 120. Ces deux profils sont symétriques par rapport au plan médian de la fenêtre spécifique formée.

Chaque profil fonctionnel 120 présent sur le pourtour de l'enroulement 11d comprend un creux 122, une dent 121 formée d'une pente dite ascendante 126 et d'une pente dite descendante 123, un second creux 124 et une autre pente ascendante 125. Dans la position fermée où les branches sont rabattues contre la monture 1, les ergots et leurs sous-branches se trouvent logés au niveau des creux 122 où la branche est dans une position stable et où les sous-branches semi-rigides sont sensiblement contraintes. Comme la position est stable, la branche n'aura pas tendance à se séparer de la monture grâce à la présence des dents 121.

Lorsque la branche est mobilisée en ouverture à partir de cette position de fermeture, la branche franchit les pentes ascendantes 126 des dents 121 puis le mouvement d'ouverture est facilité par la libération de la contrainte lors du trajet des sous-branche semi-rigides en rotation sur les pentes descendantes 123 jusqu'à ce que l'ergot et la sous-branche se positionne dans les creux 124 où les sous-branches semi-rigides sont faiblement contraintes.

Une fois la branche positionnée au niveau des creux 124, les pentes 125 permettent, au besoin, la mobilisation en extension latérale des branches mais assurent un frein fort à cette mobilisation grâce à la contrainte croissante appliquée sur les sous-branches semi-rigides par les pentes 125. Après déplacement en extension puis relâchement, les branches vont alors avoir tendance à glisser en rotation sur les pentes 125 et à retourner à la position stable au sein des creux 124. On assure ainsi très simplement et très robustement le retour de la branche dans sa position ouverte habituelle.

On met ainsi en oeuvre, grâce au profil fonctionnel selon l'invention, une butée de charnière, un accompagnement à l'ouverture et une possibilité d'extension latérale à comportement de ressort. Tout cela est réalisé à l'aide des mêmes éléments matériels et de manière très simple et légère.

En pointillés, sont représentées d'autres extrémités envisageables pour les lamelles 110 et 111 selon l'invention. Ces extrémités sont alors du type de celles utilisées dans les pinces double clic qui comprennent deux lamelles enroulées découpées préalablement dans une plaque de métal avec un profil fonctionnel 120 assurant une résistance transitoire au mouvement en rotation des ailettes de la pince double clic.

La présence de la structure faisant pont 112 est cependant avantageuse car cela permet de rigidifier le comportement des lamelles 110 et 111 et d'assurer l'absence de mouvement des lamelles lors de la mobilisation des ergots 22a et 22b de la branche au sein de l'enroulement 11d formé une fois que l'ensemble formé par les deux lamelles 110 et 111 et la structure faisant pont 112 est enroulé. La structure faisant pont 112 permet aussi l'obtention d'une meilleure finition ce qui est un point important dans le domaine de la lunetterie.

La figure 5 montre une autre réalisation de lamelles 110 et 111 . Dans cette réalisation, les profils fonctionnels des lamelles 110 et 111 ne sont pas symétriques. En effet, seule la lamelle 111 comporte un profil fonctionnel 120 présentant une unique dent 121, formée d'une pente dite ascendante 126 et d'une pente dite descendante 123, permettant de générer une butée de charnière dans un creux 122. En effet, une fois l'ergot pivoté en fermeture le long du profil fonctionnel noté 120, la branche est bloquée en position fermée au niveau du creux 122. Un léger accompagnement à l'ouverture est permis avec la réalisation de la figure 5 lors de la libération de la contrainte sur la pente 123. En revanche le profil fonctionnel de la figure ne permet pas d'extension latérale de la branche. On remarque ici que la seconde lamelle 110 pourrait porter aussi un profil fonctionnel mais distinct de celui de la lamelle 111. Par exemple, ainsi que représenté en pointillés, il pourrait présenter un creux noté 127 pour retenir la branche dans sa position ouverte.

La figure 6 montre une variante de réalisation d'une monture 1 . Sur cette monture, ainsi que cela est visible sur la figure 6B, les éléments de fixation 10g et 10d sont différents de ceux montrés sur la figure 3B.

La monture est ici prolongée par deux retours de monture notés 12g et 12d qui sont repliés ainsi que montrés sur la figure 6A vers l'intérieur de la monture pour ressortir dans les encoches 13d et 13g de la monture 1 où se trouveront les verres. Les verres sont ensuite fixés d'une manière connue grâce aux moyens de fixation 10g et 10d.

On remarque sur cette figure que, dans une telle réalisation, les lamelles forment nécessairement une fenêtre spécifique pour permettre la fixation du verre. Avantageusement, la fenêtre spécifique est fermée par une structure faisant pont formant une languette notée 14 qui est rabattue et enroulée davantage que les retours 12d et 12g vers l'intérieur de la monture 1 pour former les enroulements, ainsi que cela est visible sur la figure 6A. cette languette est avantageusement réalisée par découpage de la plaque de matériau dans laquelle est découpée la monture ainsi que cela est montré sur la figure 6B.

La figure 7 montre une monture 1 réalisée à partir d'un matériau moulé, plastique, nylon, résine ou autre, ou découpé, bois ou autre, dans laquelle des seconds éléments fonctionnels portant des enroulements 11d et 11g ont été insérés et fixés. Ces éléments fonctionnels sont typiquement constitués par la portion de plaque métallique portant la fenêtre spécifique sur les figures 3B ou 6B.

Les figures 8A et 8B montrent des variantes de réalisation pour les branches semi-rigides 21a et 21b. On remarque ici que les ergots 22a et 22b sont de simples découpes dans le plan de la plaque de matériau semi-rigide. Dans ce cas particulier, il sera avantageux de munir l'enroulement ou l'ergot lui-même avec un cylindre qui, extérieurement, sera cylindrique et, intérieurement, permettra l'introduction et le maintien en position centrée au sein de l'enroulement de l'ergot plan 22a ou 22b, tel que représenté sur les figures 8A et 8B.

Sur la figure 8A, on voit que les sous-branches semi-rigides 21a et 21b sont indépendantes et solidarisées dans un même plan grâce à un motif en queue d'aronde. Une fois les ergots introduits indépendamment dans les enroulements, les queues d'aronde sont assemblées. L'ensemble est destiné à être ensuite coulissé au sein d'un fourreau 20 formant la branche de lunette telle que représenté sur la figure 2A.

Tout autre motif de solidarisation permettant de placer dans un même plan deux sous-branches semi-rigides puis de les coulisser dans un fourreau formant la branche, pourra être utilisé.

On remarque aussi que, si un matériau suffisamment élastique est utilisé, l'utilisation de deux pièces indépendantes ne sera pas nécessaire. L'avantage d'utiliser deux pièces indépendantes est de permettre d'introduire les ergots un par un dans les deux enroulements avant de solidariser les deux sous-branches semi-rigides ensemble puis les immobiliser par rapport à la branche. Cela est utile quand l'utilisation d'un matériau suffisamment rigide est obligatoire pour obtenir un bon comportement sur le profil fonctionnel selon l'invention.

La figure 8B montre deux sous-branches 21a et 21b articulées par rapport à un axe 23. Ici, il pourra être nécessaire d'utiliser une pièce 24 d'écartement des deux sous-branches semi-rigides pour les immobiliser l'une par rapport à l'autre. Cependant on note que l'utilisation de sous-branches prolongées après l'axe 23 du côté opposé aux ergots par des prolongations 25, ainsi que montré sur la figure 8B, permet d'immobiliser les deux sous-branches dans un fourreau du type de celui montré sur la figure 2A. Dans ce cas, le fourreau bloque les deux prolongations 25 de manière à ce que la pièce en ciseau ne puisse plus être mobilisée en écartement ou en resserrement. La pièce d'écartement 24 n'est alors pas utile.

La figure 9 montre enfin une réalisation particulièrement esthétique d'un second élément d'un dispositif selon l'invention. Dans ce second élément fonctionnel, des enroulements 11₁,11₂, et éventuellement 11₃, sont réalisés sur plusieurs sous-montures gigognes 1, 2 et, éventuellement, 3. Ici, seule la sous-monture 1 supporte les moyens de fixation 10d des verres 10.

Dans le cas où seulement les deux sous-montures 1 et 2 sont utilisées, les enroulements des deux sous-montures 1 et 2 présentent un interstice médian entre l'enroulement haut et l'enroulement bas. Des ergots portés par des branches semi-flexibles du type de ceux présentés sur les figures 2 et 8 peuvent alors être utilisés. Dans ce cas, la sous-monture 2 présente avantageusement un profil fonctionnel du genre de ceux décrits auparavant afin de permettre une dynamique particulière à l'ouverture et à la fermeture de branches. On remarque ici que la sous-monture 1 comprend un enroulement vers l'arrière de la monture alors que la seconde sous-monture 2 présente un enroulement vers l'avant, les deux enroulements de lamelles s'interpénétrant lors de la formation de la monture finale.

Dans le cas où les trois sous-montures 1, 2 et 3 sont utilisées pour former la monture entière, aucun interstice n'est présent dans la partie médiane de l'enroulement qui est alors unique une fois les sous-montures rassemblées.

Cette figure 9B montre l'introduction d'un cylindre 15 de matériau plastique, nylon ou autre dans l'enroulement obtenu. Ce cylindre 15 présente un orifice rectangulaire 15a pour accueillir les ergots du type de ceux présentés sur les figures 8A et 8B où les sous-branches semi-rigides sont découpées dans une plaque métallique. Cela permet d'assurer l'absence de jeu dans le dispositif d'articulation selon l'invention. Dans les réalisations précédentes, l'utilisation de deux cylindres, un par enroulement, est nécessaire. Ici un seul cylindre est utilisé pour solidariser les trois sous-montures 1, 2 et 3. Un tel cylindre unique accueille alors des ergots venant pincer l'enroulement par le haut et le bas.

La figure 10 montre de tels ergots 22a et 22b alors portés par des sous-branches semi-rigides 21a et 21b dont la flexibilité en écartement est utilisée contrairement aux réalisations décrites précédemment où la flexibilité en resserrement des sous-branches est utilisée. Un profil fonctionnel pourra être placé sur le pourtour haut et bas de l'enroulement unique obtenu, c'est-à-dire sur le pourtour extérieur de l'enroulement de la sous-monture 1 pour obtenir un comportement dynamique des branches ainsi que par ailleurs décrit selon l'invention. Cependant cette réalisation conduira à un léger écartement des sous-branches lors de la mobilisation en rotation sur le profil fonctionnel ce qui peut être d'un rendu esthétique moindre.

On remarque enfin que diverses mises en oeuvre peuvent être réalisées selon les principes de l'invention.

## Revendications

1. Dispositif en forme d'une paire de lunettes comprenant :
- au moins une branche de lunette (2), la branche comprenant à une extrémité un premier élément fonctionnel comprenant deux sous-branches semi-rigides (21a, 21b) comprenant des ergots (22a, 22b) orientés vers l'intérieur, et
- une monture (1) comprenant, à chaque extrémité latérale, un second élément fonctionnel comprenant aux moins deux lamelles rigides (110, 111) enroulées de manière identique sur elles-mêmes, l'enroulement définissant l'axe d'articulation de la branche (2), au moins une lamelle comprenant un profil fonctionnel (120) orienté vers l'extérieur avec une dent (121) entre un premier creux (122) et un second creux (123, 124), et
- un cylindre (15) introduit dans chaque enroulement, le cylindre présentant des orifices rectangulaires (15a) pour accueillir les ergots (22a, 22b) des sous-branches,
dans lequel, dans l'état montée de la branche (2) sur la monture (1), chaque ergot (22a, 22b) est introduit dans un enroulement afin que les enroulements appliquent une mise sous contrainte des sous-branches (21a, 21b) supportant les ergots (22a, 22b) introduits dans les enroulements (11d, 11g),
dans la position fermée, l'ergot se trouve logé dans le premier creux correspondant (122), et dans la position ouverte, l'ergot se trouve logé dans le second creux correspondant (123, 124), ayant passé du premier creux au second creux par franchissement de la dent (121).

2. Dispositif selon la revendication 1, **caractérisé en ce que** le premier creux (122) forme une butée de charnière lorsque la branche (2) est repliée vers la monture (1), la contrainte appliquée sur les sous-branches (21a, 21b) augmentant lors du pivotement d'ouverture de la branche (2) quand elle quitte le premier creux (122).

3. Dispositif selon la revendication 2, **caractérisé en ce que** la dent (121) applique une opposition transitoire à la mobilisation en rotation selon un principe de double clic, l'ensemble lamelles (110, 111) enroulées / sous-branches semi-rigides (21a, 21b) formant alors un ressort solide lors de la mobilisation de la branche (2) sur la dent (121).

4. Dispositif selon l'une des revendications 1 à 3, **caractérisé en ce que** le profil fonctionnel (120) présente une pente (125) telle qu'il réalise un rappel en extension latérale de la branche (2), la contrainte appliquée sur les sous-branches (21a, 21b) se déplaçant sur la pente (125) augmentant lors du pivotement d'extension latérale de la branche (2) préalablement ouverte.

5. Dispositif selon l'une des revendications 1 à 4, **caractérisé en ce que** les deux lamelles (110, 111) présentent le second profil fonctionnel (120), ces deux profils fonctionnels étant symétriques par rapport à un plan médian situé entre les lamelles (110, 111) enroulées.

6. Dispositif selon la revendication 5, **caractérisé en ce que** les profils fonctionnels (120) sont situés face à face.

7. Dispositif selon l'une des revendications 1 à 6, **caractérisé en ce que** les sous-branches (21a, 21b) sont deux pièces indépendantes fixées ensemble au sein de la branche (2) ou de la monture (1) après que les ergots (22a, 22b) aient été introduits dans les enroulements (11d, 11g).

8. Dispositif d'articulation selon la revendication 7, **caractérisé en ce que** les deux sous-branches (21a, 21b) sont aptes à être coulissées dans un fourreau (20) présent à cet effet dans la branche (2) ou dans la monture (1) pour y être fixées.

## Patentansprüche

1. Vorrichtung in Form einer Brille, umfassend:
- wenigstens einen Brillenbügel (2), wobei der Bügel an einem Ende ein erstes Funktionselement mit zwei halbstarren Teilbügeln (21 a, 21 b), die einwärts gerichtete Nasen (22a, 22b) aufweisen, umfasst, und
- eine Fassung (1), die an jedem Seitenende ein zweites Funktionselement mit wenigstens zwei starren Lamellen (110, 111), die identisch auf sich selbst gewickelt sind, umfasst, wobei die Wicklung die Gelenkachse des Bügels (2) definiert, wobei wenigstens eine Lamelle ein auswärts gerichtetes Funktionsprofil (120) mit einem Zahn (121) zwischen einer ersten Vertiefung (122) und einer zweiten Vertiefung (123, 124) aufweist, und
- einen Zylinder (15), der in jede Wicklung eingeführt ist, wobei der Zylinder rechteckige Öffnungen (15a) für die Aufnahme der Nasen (22a, 22b) der Teilbügel aufweist,
wobei im montierten Zustand des Bügels (2) an der Fassung (1) jede Nase (22a, 22b) in eine Wicklung eingeführt ist, damit die Wicklungen ein Unterspannungsetzen der Teilbügel (21 a, 21 b), welche die in die Wicklungen (11 d, 11 g) eingeführten Nasen (22a, 22b) tragen, anwenden,
in der geschlossenen Stellung die Nase in der entsprechenden ersten Vertiefung (122) aufgenommen ist und in der geöffneten Stellung die Nase, die durch Überschreiten des Zahns (121) von der ersten Vertiefung in die zweite Vertiefung übergegangen ist, in der entsprechenden zweiten Vertiefung (123, 124) aufgenommen ist.

2. Vorrichtung nach Anspruch 1, **dadurch gekennzeichnet, dass** die erste Vertiefung (122) einen Scharnieranschlag bildet, wenn der Bügel (2) in Richtung der Fassung (1) geklappt wird, wobei die an die Teilbügel (21 a, 21 b) angelegte Spannung beim Öffnungsschwenken des Bügels (2) zunimmt, wenn er die erste Vertiefung (122) verlässt.

3. Vorrichtung nach Anspruch 2, **dadurch gekennzeichnet, dass** der Zahn (121) einen vorübergehenden Widerstand gegen die Drehmobilisierung nach einem Doppelklick-Prinzip aufbringt, wobei die Anordnung aus gewickelten Lamellen (110, 111) / halbstarren Teilbügeln (21 a, 21 b) dann eine feste Feder bei der Mobilisierung des Bügels (2) an dem Zahn (121) bildet.

4. Vorrichtung nach einem der Ansprüche 1 bis 3, **dadurch gekennzeichnet, dass** das Funktionsprofil (120) eine Schräge (125) aufweist, die derart ist, dass sie ein Rückstellen des Bügels (2) im seitlichen Erstrecken vollzieht, wobei die an die sich auf der Schräge (125) bewegenden Teilbügel (21 a, 21 b) angelegte Spannung beim Verschwenken des zuvor geöffneten Bügels (2) zum seitlichen Erstrecken zunimmt.

5. Vorrichtung nach einem der Ansprüche 1 bis 4, **dadurch gekennzeichnet, dass** die beiden Lamellen (110, 111) das zweite Funktionsprofil (120) aufweisen, wobei diese beiden Funktionsprofile in Bezug auf eine zwischen den gewickelten Lamellen (110, 111) befindliche Mittelebene symmetrisch sind.

6. Vorrichtung nach Anspruch 5, **dadurch gekennzeichnet, dass** die Funktionsprofile (120) einander gegenüberliegen.

7. Vorrichtung nach einem der Ansprüche 1 bis 6, **dadurch gekennzeichnet, dass** die Teilbügel (21 a, 21 b) zwei unabhängige Teile sind, die in dem Bügel (2) oder der Fassung (1) miteinander befestigt sind, nachdem die Nasen (22a, 22b) in die Wicklungen (11 d, 11g) eingeführt worden sind.

8. Gelenkvorrichtung nach Anspruch 7, **dadurch gekennzeichnet, dass** die beiden Teilbügel (21 a, 21 b) geeignet sind, in eine zu diesem Zweck in dem Bügel (2) oder in der Fassung (1) vorhandene Hülse (20) geschoben zu werden, um darin befestigt zu werden.

## Claims

1. A device in the form of a pair of spectacles, the device comprising:
• at least one temple (2), the temple having at one end a first functional element comprising two semi-rigid sub-temples (21a, 21b) with inwardly-directed studs (22a, 22b);
• a frame (1) including, at each lateral end, a second functional element comprising at least two rigid strips (110, 111) rolled up identical manner, the rolls defining a hinge axis for the temple (2), at least one strip having a functional profile (120) facing outwards with a tooth (121) between a first recess (122) and a second recess (123, 124); and
• a cylinder (15) introduced into each roll, the cylinder presenting rectangular orifices (15a) for receiving the studs (22a, 22b) of the sub-temples;
wherein, when the temple (2) is in the mounted state on the frame (1), each stud (22a, 22b) is inserted in a roll so that the rolls apply stress on the sub-temples (21a, 21b) supporting the studs (22a, 22b) inserted in the rolls (11d, 11g) ; and
in the closed position, the stud is received in the corresponding first recess (122), and in the open position, the stud is received in the corresponding second recess (123, 124), passing from the first recess to the second recess by going past the tooth (121).

2. A device according to claim 1, **characterized in that** the first recess (122) forms a hinge abutment when the temple (2) is folded onto the frame (1), the stress applied on the sub-temples (21a, 21b) increasing during pivoting to open the temple (2) as it moves away from the first recess (122).

3. A device according to claim 2, **characterized in that** the tooth (121) presents transient opposition to the pivoting movement on a double-click principle, the rolled-up strips (110, 111) and the semi-rigid sub-temples (21a, 21b) then together forming a solid spring during movement of the temple (2) on the tooth (121).

4. A device according to any one of claims 1 to 3, **characterized in that** the functional profile (120) presents a slope (125) suitable for returning the temple (2) into lateral extension, the stress applied on the sub-temples (21a, 21b) as they move over the slope (125) then increasing during lateral extension pivoting of the previously open temple (2).

5. A device according to any one of claims 1 to 4, **characterized in that** both of the two strips (110, 111) present the second functional profile (120), the two functional profiles being symmetrical about a midplane situated between the rolled-up strips (110, 111).

6. A device according to claim 5, **characterized in that** the functional profiles (120) are situated facing each other.

7. A device according to any one of claims 1 to 6, **characterized in that** the sub-temples (21a, 21b) are two independent parts that are fastened together within the temple (2) or the frame (1) after the studs (22a, 22b) have been inserted in the rolls (11d, 11g).

8. A hinge device according to claim 7, **characterized in that** both sub-temples (21a, 21b) are suitable for being slid in a sheath (20) provided for this purpose in the temple (2) or in the frame (1) in order to be fastened thereto.
